# EUROPÄISCHE PATENTSCHRIFT

(11) **EP 3 837 746 B1**
(45) Veröffentlichungstag und Bekanntmachung des Hinweises auf die Patenterteilung: **01.11.2023**
(21) Anmeldenummer: 19746468.8
(22) Anmeldetag: 29.07.2019
(51) Int. Cl.: H02M 7/219, H02H 7/125, H02H 7/16, H02H 7/10, H02M 1/32, H02H 3/087

(54) **ELEKTRISCHE AC/DC-UMWANDLUNGS-ANORDNUNG**
ELECTRICAL AC/DC CONVERSION ARRANGEMENT
ENSEMBLE DE CONVERSION CA/CC ÉLECTRIQUE

(30) Priorität: 16.08.2018 DE 102018119916
(43) Veröffentlichungstag der Anmeldung: 23.06.2021
(73) Patentinhaber: Eaton Intelligent Power Limited, Dublin 4 (IE)
(72) Erfinder: ASKAN, Kenan, 1090 Austria 1090 Vienna (AT)
(74) Vertreter: Epping - Hermann - Fischer
(86) Internationale Anmeldenummer: PCT/EP2019/070324
(87) Internationale Veröffentlichungsnummer: WO 2020/035296

(56) Entgegenhaltungen:
- EP-A2- 2 955 529
- DE-T5-112013 006 487
- KR-A- 20030 015 589
- US-A1- 2017 149 346

## Beschreibung

Die Erfindung betrifft eine elektrische AC/DC-Umwandlungs-Anordnung gemäß Patentanspruch 1.

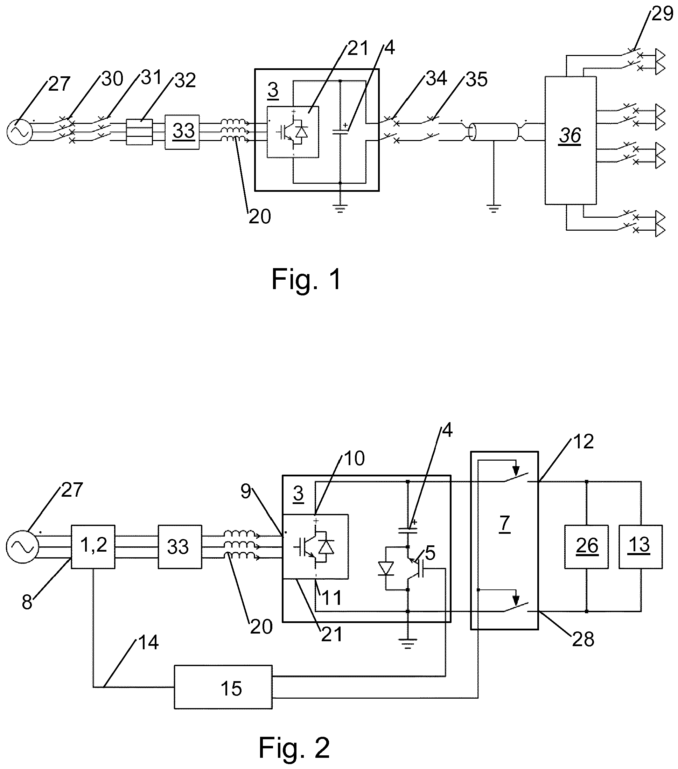

Fig. 1 zeigt eine elektrische AC/DC-Umwandlungs-Anordnung gemäß dem Stand der Technik. Diese setzt sich aus folgenden, jeweils separaten Komponenten zusammen:
- ein Gleichrichter 3, umfassend den eigentlichen Gleichrichter 21 sowie einen, am Ausgang des Gleichrichters 21 angeschlossenen Kondensator 4, insbesondere eine sog. Kondensatorbank,
- Eingangsspulen 20, welche im Englischen als "boost inductance" bezeichnet werden,
- ein elektromechanischer AC-Schutzschalter 30 mit einer typischen Ansprechzeit von 5 bis 9 ms zum Kurzschlussschutz auf der Wechselstromseite bei langen Gleichstromleitungen,
- ein AC-Schütz 31 mit einer typischen Ansprechzeit von 20 bis 30 ms zur Sicherstellung einer galvanischen Trennung, und um einen Nennstrom bzw. einen Betriebsstrom zu schalten,
- "schnelle" Schmelzsicherungen 32 zum Schutz des Gleichrichters 3 bzw. der Dioden für den Fall eines Fehlers zwischen dem Gleichrichter 3 und der Kondensatorbank, da sowohl der AC-Schutzschalter 30 als auch das AC-Schütz 31 in einem derartigen Fall zu langsam wären um einen Schutz zu gewährleisten,
- ein elektromechanischer DC-Schutzschalter 34 mit einer typischen Ansprechzeit von 5 bis 9 ms zum Kurzschlussschutz auf der Gleichstromseite,
- ein DC-Trennschalter 35 mit einer typischen Ansprechzeit von 20 bis 30 ms zur Sicherstellung einer galvanischen Trennung.

Weiters weist die Anlage einen EMC-Filter 33 sowie einen Gleichstromverteiler 36 auf, an welchen unterschiedliche Lasten angeschlossen werden können, wobei jeweils ein weiterer Gleichstromschutzschalter 29 an den jeweiligen Ausgängen des Gleichstromverteilers 36 angeschlossen sind. Die jeweiligen Komponenten sind dabei wie in Fig. 1 dargestellt verschaltet. Weiters weis die Anordnung gemäß dem Stand der Technik jeweils nachfolgend den Gleichstromschutzschaltern 29 jeweils einen Trennschalter auf, welcher in Fig. 1 nicht dargestellt ist.

Wie aus dieser Anlage ersichtlich, ist der Schutz derartiger Systeme bzw. Anlagen sehr aufwendig, und erfordert eine große Anzahl unterschiedlicher, separater Geräte. Insbesondere sind dabei spezielle Gleichstromschutzschaltgeräte sowie Gleichstromleistungsschalter erforderlich. Da das Abschalten hoher Gleichströme aufgrund des fehlenden Nulldurchgangs der Spannung deutlich schwieriger ist, als das Abschalten von Wechselströmen sind entsprechend leistungsstarke Gleichstromschaltgeräte jeweils technisch deutlich aufwendiger als vergleichbare Wechselstromschaltgeräte. Diese sind nicht nur komplexer im Aufbau sondern weisen auch ein größeres Volumen auf, und sind aufgrund der erhöhten Komplexität auch kostenintensiver als vergleichbare Wechselstromschaltgeräte.

Aus der KR 2003 0015589 A ist ein mehrstufiger AC/DC-Wandler bekannt, wobei ein Gleichstromnetz schnell von einer kurzgeschlossenen Last getrennt werden können soll.

Weiters sind aus der US 2017/149346 A1, der DE 11 2013 006487 T5 und der EP 2 955 529 A2 weitere AC/DC-Umwandlungs-Anordnungen, sowie Ansteuerungsvorrichtungen für Halbleiterelemente bekannt.

Aufgabe der Erfindung ist es daher eine elektrische AC/DC-Umwandlungs-Anordnung der eingangs genannten Art anzugeben, mit welcher die genannten Nachteile vermieden werden können, und mit welcher einfach und mit geringem Aufwand hinsichtlich der Anzahl und der Art der erforderlichen Komponenten ein Schutz einer elektrischen AC/DC-Umwandlungs-Anordnung gewährleistet werden kann.

Erfindungsgemäß wird dies durch die Merkmale des Patentanspruches 1 erreicht.

Dadurch kann eine sichere elektrische AC/DC-Umwandlungs-Anordnung geschaffen werden, welche deutlich weniger Komponenten aufweist, als dies bei bekannten AC/DC-Umwandlungs-Anordnungen der Fall ist. Zudem ist es dabei nicht mehr erforderlich, spezielle Gleichstromschaltgeräte zu verwenden, welche in der Lage sind einen Lichtbogen bei Gleichstrom zu löschen, da das Abschalten auf der AC-Seite erfolgt und durch den ersten Halbleiterschalter am wenigstens einen Glättungskondensator unterstützt wird.

Bei der gegenständlichen Anordnung ist es möglich, dass das erste Trennrelais als

### [weiter auf Seite 3 der ursprünglichen Beschreibung]

herkömmliches AC-Trennrelais ausgebildet ist, welches keine DC-Lichtbogenlöscheinrichtung aufweist, wenngleich dieses auf der Gleichstromseite angeordnet ist.

Weiters kann auf Schmelzsicherungen auf der AC-Seite verzichtet werden. Auf der AC-Seite werden der elektromechanische AC-Schutzschalter der AC-Leistungsschalter sowie die Schmelzsicherungen durch ein einziges hybrides bzw. Halbleiter-Schutzschaltgerät ersetzt.

Auf der DC-Seite sind überhaupt keine speziellen DC-Schaltgeräte und auch keinerlei Selbstschalter mehr erforderlich. Anstatt aufwendiger DC-Schaltgeräte kommt lediglich ein Leistungshalbleiterschalter zur Anwendung, welcher seriell zu dem wenigstens einen Glättungskondensator bzw. der Kondensatorbank geschaltet ist.

Zusammenfassend kann daher festgestellt werden, dass durch die gegenständlichen Maßnahmen eine deutlich verringerte Anzahl an Schaltgeräten erforderlich ist, um einen Schutz einer elektrischen AC/DC-Umwandlungs-Anordnung zu gewährleisten, wobei insbesondere keine technisch aufwendigen und komplexen DC-Schutzschalter und DC-Leistungsschalter erforderlich sind. Weiters kann auf umständlich handzuhabende Schmelzsicherungen verzichtet werden. Da solche im Fehlerfall ausgetauscht und entsprechend bevorratet werden müssen, kann allein schon dadurch, dass keine Schmelzsicherungen erforderlich sind, die Systemverfügbarkeit deutlich gesteigert werden.

Die Erfindung betrifft gemäß Patentanspruch 9 weiters ein Verfahren zum Abschalten wenigstens eines Teiles einer gegenständlichen elektrischen AC/DC-Umwandlungs-Anordnung.

Dadurch werden die zu Patentanspruch 1 geltend gemachten Vorteile erzielt.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine elektrische AC/DC-Umwandlungs-Anordnung gemäß dem Stand der Technik als schematische Darstellung;
Fig. 2 eine schematische Darstellung einer ersten Ausführungsform einer gegenständlichen elektrischen AC/DC-Umwandlungs-Anordnung;
Fig. 3 eine schematische Darstellung einer zweiten Ausführungsform einer gegenständlichen elektrischen AC/DC-Umwandlungs-Anordnung; und
Fig. 4 eine schematische Darstellung einer dritten Ausführungsform einer gegenständlichen elektrischen AC/DC-Umwandlungs-Anordnung

Die Fig. 2, 3 und 4 zeigen jeweils eine elektrische AC/DC-Umwandlungs-Anordnung umfassend wenigstens folgende Komponenten:
- einen AC-Schutzschalter 1, welcher als Hybrider-Schutzschalter 2 oder als Halbleiter-Schutzschalter ausgebildet ist, und
- einen Gleichrichter 21, und
- wenigstens einen Glättungskondensator 4 und einen seriell zu diesem geschalteten ersten Halbleiterschalter 5, und
- wenigstens ein erstes Trennrelais 7 zur galvanischen Trennung.

Die gegenständliche elektrische AC/DC-Umwandlungs-Anordnung weist insbesondere keine weiteren Schutzschaltgeräte auf der AC-Seite auf.

Die gegenständliche elektrische AC/DC-Umwandlungs-Anordnung weist insbesondere keine Schutzschaltgeräte bzw. sog. Selbstschalter auf der DC-Seite auf.

Die gegenständlich in den Figuren dargestellte Anlage ist mit einem Leiter geerdet. Die Anlage kann jedoch auch ohne Erdung bzw. mit einem geerdeten Mittenpotential ausgebildet werden.

Der AC-Schutzschalter 1 ist ein sog. Hybrider-Schutzschalter 2 oder ein Halbleiter-Schutzschalter. Halbleiter-Schutzschalter unterbrechen einen Strom ausschließlich durch wenigstens einen Leistungshalbleiter, welcher ständig stromdurchflossen ist. Hybride-Schutzschalter 2 weisen eine Parallelschaltung aus einem Bypassschalter und einer Leistungshalbleiterschaltung auf, sowie weiters bevorzugt Trennkontakte zur galvanischen Trennung. Ein derartiges Schutzschaltgerät ist etwa aus der WO 2015/028634 A1 der Anmelderin bekannt.

Der AC-Schutzschalter 1 bildet den Wechselstromeingang 8 bzw. die Wechselstromeingänge 8 der gegenständlichen Anlage. In den schematischen Darstellungen ist eine AC-Quelle 27 eingezeichnet, welche jeweils als Drehstromquelle dargestellt ist. Die konkrete Anzahl an Außenleitern der AC-Versorgung, sowie das Vorhandensein eines Neutralleiters sind gegenständlich nicht wesentlich und nicht einschränkend. Der AC-Schutzschalter 1 ist entsprechend auszubilden bzw. können mehrere AC-Schutzschalter 1 parallel vorgesehen sein.

Ein Ausgang des AC-Schutzschalters 1 bzw. die Ausgänge des AC-Schutzschalters 1 sind wenigstens mittelbar schaltungstechnisch mit einem Eingang 9 bzw. Eingängen des Gleichrichters 21 verbunden ist. Dabei ist bevorzugt ein EMC-Filter 33 zwischen den AC-Schutzschalter 1 und den Gleichrichter 21 geschaltet.

Die Anlage weist einen Gleichrichter 21 auf. Die Gleichrichterschaltanordnung 21 ist bevorzugt umfassend einer vorgebbaren Anzahl schaltbarer Halbbrücken ausgebildet, wie dies aus der Inverter-Technologie bekannt ist. Der Gleichrichter 21 kann auch anders aufgebaut sein.

Die Anlage weist wenigstens einen Glättungskondensator 4 auf, welcher selbstverständlich durch jede beliebige Anzahl miteinander verschalteter diskreter Kondensatoren 4 gebildet sein kann.

Bevorzugt ist vorgesehen, dass der Gleichrichter 21 und der Glättungskondensator 4 gemeinsam Teil eines "aktiven Gleichrichters 3" sind. Ein solcher "aktiver Gleichrichter 3" wird im Englischen als "active frontend" bezeichnet.

Weiters kann vorgesehen sein, dass auch die dargestellten Eingangsspulen 20 besteht, welche im Englischen als "boost inductance" bezeichnet werden, zusammenmit dem Gleichrichter 21 ausgebildet werden. Eine derartige Anordnung wird im Englischen als "Boost Converter" bezeichnet.

Seriell zu dem Glättungskondensator 4 ist ein erster Halbleiterschalter 5 geschaltet. Der erste Halbleiterschalter 5 ist bevorzugt als IGBT oder als MOSFET ausgebildet. Bei Ausbildung des Halbleiterschalters 5 als IGBT ist weiters eine sog. Antiparallel-Diode vorgesehen, wie dies in den Fig. 2, 3 und 4 dargestellt ist. Diese Anordnung bildet einen bidirektionalen Schalter. Es können an dieser Stelle auch mehrere parallel geschaltete erste Halbleiterschalter 5 angeordnet sein.

Die Anordnung des ersten Halbleiterschalters 5 an dieser Stelle hat einen deutlich geringeren Widerstand und damit auch deutlich geringere Verluste als die alternative Anordnung eines Solid State Circuit Breakers an der DC-Seite seriell zur Last.

Der Verbund aus Glättungskondensator 4 und dem seriell geschalteten ersten Halbleiterschalter 5 verbindet den ersten Ausgang 10 des Gleichrichters 21 mit dem zweiten Ausgang 11 des Gleichrichters 21, wie dies in den Fig. 2, 3 und 4 dargestellt ist.

Gemäß einer besonders bevorzugten Ausführungsvariante ist vorgesehen, dass der wenigstens eine Glättungskondensator 4 und der ersten Halbleiterschalter 5 zusammen mit dem Gleichrichter 21 als einstückige Einheit ausgebildet sind.

Das erste Trennrelais 7 ist zur Gewährleistung einer galvanischen Trennung vorgesehen. Der erste Ausgang 10 des Gleichrichters 21 ist wenigstens mittelbar schaltungstechnisch mit einem Eingang des ersten Trennrelais 7 verbunden. Der Gleichrichter 21 weist zwei Ausgänge unterschiedlicher Polarität auf. Bevorzugt ist vorgesehen, dass das erste Trennrelais 7 zwei Eingänge und zwei Ausgänge aufweist und entsprechend auch zwei Schaltstrecken mit jeweils einem Unterbrecherkontakt, sowie dass beides Ausgänge 10, 11 des Gleichrichters 21 an das erste Trennrelais 7 angeschlossen sind, wie dies in den Fig. 2, 3 und 4 dargestellt ist.

Bei der gegenständlichen Anordnung ist es möglich, dass das erste Trennrelais 7 als herkömmliches AC-Trennrelais ausgebildet ist, welches keine DC-Lichtbogenlöscheinrichtung aufweist, wenngleich dieses auf der Gleichstromseite angeordnet ist.

Zu beachten ist dabei, dass in den Verbindungsleitungen zwischen den Ausgängen 10, 11 des Gleichrichters 21 und dem ersten Trennrelais 7 - gemäß der ersten und zweiten bevorzugten Ausführungsform - kein weiterer Halbleiterschalter angeordnet ist. Die entsprechenden Verbindungen sind daher schalterfrei.

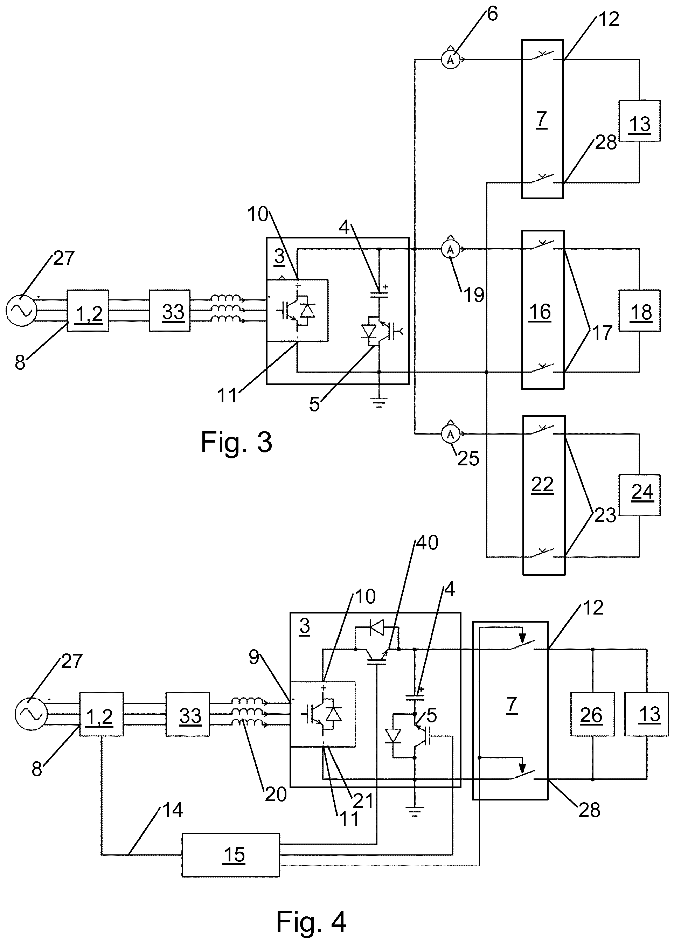

Gemäß der dritten bevorzugten Ausführungsform, wie in Fig. 4 dargestellt, ist vorgesehen, dass die Anordnung weiters einen zweiten Halbleiterschalter 40 aufweist, welche zwischen dem ersten Ausgang 10 des Gleichrichters 21 und dem Glättungskondensator 4 geschaltet ist.

Der Ausgang 12 bzw. die Ausgänge 12, 18 des ersten Trennrelais 7 bildet bzw. bilden einen ersten DC-Ausgang der Anordnung und sind zum Anschluss wenigstens eines ersten Gleichstromverbrauchers 13 vorgesehen. Dabei ist kein weiterer Gleichstromschutzschalter erforderlich. Dabei sind die beiden Ausgänge unterschiedlicher Polarität lediglich in Fig. 2 jeweils mit einem separaten Bezugszeichen bezeichnet. In Fig. 2 ist weiters ein elektrischer Fehler 26 auf der DC-Seite eingezeichnet.

Die Anlage bzw. Anordnung weist gemäß einer bevorzugten Weiterbildung wenigstens einen ersten Stromsensor 6 auf, welcher bevorzugt zwischen dem ersten Ausgang 10 des Gleichrichters 3 und dem ersten Trennrelais 7 angeordnet ist. Dieser ist lediglich in Fig. 3 dargestellt. Der erste Stromsensor 6 kann auch als Strommessanordnung bezeichnet werden. Der erste Stromsensor 6 dient dabei insbesondere zur Detektion von Überströmen bzw. dazu vor dem Öffnen des ersten Trennrelais 7 sicher zu stellen, dass dieses auch tatsächlich stromlos ist.

Zur Kurzschlussdetektion weist die Anordnung insbesondere eine Einheit zur Detektion einer Entsättigung (englisch: desaturation detection) des ersten Halbleiterschalters 5 auf. Die entsprechende Detektoreinheit kann beispielsweise als Teil einer Treiberschaltung des ersten Halbleiterschalters 5 ausgebildet sein, und ist bevorzugt als Teil der Steuer- und Kontrolleinheit 15 ausgebildet. Die grundsätzliche Funktion der Detektion eines Kurzschlusses durch Überwachung des Sättigungszustandes eines bestimmten Leistungshalbleiters ist in der bereits erwähnten WO 2015/028634 A1 der Anmelderin beschrieben, und muss nicht mehr näher erläutert werden. Besonderer Vorteil einer derartigen Einheit ist die besonders geringe Detektionszeit, welche es ermöglicht einen Kurzschluss bereits abzuschalten, solange der Kurzschlussstrom noch gering ist.

Der AC-Schutzschalter 1, der erste Halbleiterschalter 5, der optionale erste Stromsensor 6, die Einheit zur Detektion einer Entsättigung und das erste Trennrelais 7 sind wenigstens mittelbar steuerungstechnisch miteinander verbunden. Die betreffenden Komponenten sowie gegebenenfalls weitere Komponenten, können dabei auf unterschiedliche Weise verbunden sein, wobei insbesondere vorgesehen ist, dass der AC-Schutzschalter 1 und/oder der erste Halbleiterschalter 5 und/oder der ersten Stromsensor 6 und/oder das erste Trennrelais 7 und/oder die Einheit zur Detektion einer Entsättigung mittels eines Bus 14 wenigstens mittelbar verbunden sind. Dieser Bus 14 kann etwa durch eine Anzahl an Steuerleitungen gebildet werden, welche mit 24 V bzw. 28 V betrieben werden. Es kann jedoch auch jede andere Form eines Bus 14, beispielsweise ein Modbus oder USB, vorgesehen sein. Es kann aber auch eine Funkverbindung vorgesehen sein.

Durch die gegenständliche Anlage kann eine sichere elektrische AC/DC-Umwandlungs-Anordnung geschaffen werden, welche deutlich weniger Komponenten aufweist, als dies bei bekannten AC/DC-Umwandlungs-Anordnungen der Fall ist. Zudem ist es dabei nicht mehr erforderlich spezielle Gleichstromschaltgeräte zu verwenden, welche in der Lage sind einen Lichtbogen bei Gleichstrom zu löschen, da das Abschalten auf der AC-Seite erfolgt und durch den ersten Halbleiterschalter 5 am wenigstens einen Glättungskondensator 4 unterstützt wird.

Weiters kann auf Schmelzsicherungen 32 auf der AC-Seite verzichtet werden. Auf der AC-Seite werden der elektromechanische AC-Schutzschalter 30 der AC-Leistungsschalter 31 sowie die Schmelzsicherungen 32 durch ein hybrides bzw. Halbleiter-Schutzschaltgerät 2 ersetzt.

Auf der DC-Seite sind überhaupt keine speziellen DC-Schaltgeräte und auch keinerlei Selbstschalter mehr erforderlich. Anstatt aufwendiger DC-Schaltgeräte kommt lediglich ein Leistungshalbleiterschalter 5 zur Anwendung, welcher seriell zu dem wenigstens einen Glättungskondensator 4 bzw. der Kondensatorbank geschaltet ist.

Zusammenfassend kann daher festgestellt werden, dass durch die gegenständlichen Maßnahmen eine deutlich verringerte Anzahl an Schaltgeräten erforderlich ist um einen Schutz einer elektrischen AC/DC-Umwandlungs-Anordnung zu gewährleisten, wobei insbesondere keine technisch aufwendigen und kostenintensiven DC-Schutzschalter und DC-Leistungsschalter erforderlich sind. Weiters kann auf umständlich handzuhabende Schmelzsicherungen 32 verzichtet werden. Da solche im Fehlerfall ausgetauscht und entsprechend bevorratet werden müssen, kann allein schon dadurch, dass keine Schmelzsicherungen 32 erforderlich sind, die Systemverfügbarkeit deutlich gesteigert werden. Die gegenständliche Anordnung ist daher schmelzsicherungsfrei ausgebildet.

Zur Steuerung der gegenständlichen Anordnung ist vorgesehen, dass diese als weitere Komponente wenigstens eine, bereits erwähnte Steuer- und Kontrolleinheit 15 umfasst. Diese Steuer- und Kontrolleinheit 15 kann entweder als eigenständige Einheit ausgeführt sein, oder in einer der anderen Komponenten integriert sein. Entsprechend ist vorgesehen, dass die Steuer- und Kontrolleinheit 15 wenigstens mittelbar steuerungstechnisch mit dem AC-Schutzschalter 1, dem ersten Halbleiterschalter 5, dem optionalen ersten Stromsensor 6 und dem ersten Trennrelais 7 verbunden ist. Bevorzugt ist die Steuer- und Kontrolleinheit 15 weiters mit dem Gleichrichter 21 verbunden. Sofern die Steuer- und Kontrolleinheit 15 bereits in eine dieser Komponenten integriert ist, erübrigt sich natürlich eine Verbindung mit dieser einen Komponente. In diesem Fall ist dann eine der Komponenten ein Master, während die anderen Komponenten entsprechende Slaves sind. Die betreffende steuerungstechnische Intelligenz kann dabei an unterschiedlichen Komponenten angeordnet sein.

Die Steuer- und Kontrolleinheit 15 ist insbesondere umfassend einen µC bzw. µP ausgebildet. Die Einheit zur Detektion einer Entsättigung ist bevorzugt in die Steuer- und Kontrolleinheit 15 integriert.

Bei Detektion eines vorgebbaren Kurzschlussstromes auf der DC-Seite, ist vorgesehen, dass in einem ersten Schritt der erste Halbleiterschalter 5 sowie der AC-Schutzschalter 1 ausgeschaltet werden. Dazu werden die betreffenden Komponenten entsprechend angesteuert. Durch das Öffnen des ersten Halbleiterschalters 5 wird der DC-Strom sofort limitiert. Durch das Öffnen des AC-Schutzschalters 1 wird das Nachfließen von Wechselstrom gestoppt.

Gemäß einer bevorzugten Weiterbildung kann vorgesehen sein, dass weiters bzw. im Wesentlichen gleichzeitig mit dem Abschalten des ersten Halbleiters 5 und den AC-Schutzschalters 1 auch die aktiven Schaltelemente des Gleichrichters 21 abgeschaltet werden.

Bei Detektion eines vorgebbaren Überstromes auf der DC-Seite, ist bevorzugt vorgesehen zuerst die aktiven Schaltelemente des Gleichrichters 21 abzuschalten, und nachfolgend bzw. im Wesentlichen gleichzeitig den ersten Halbleiterschalter 5 sowie den AC-Schutzschalter 1 auszuschalten.

Die Detektion des Überstromes kann mittels des ersten Stromsensors 6 erfolgen. Alternativ kann ein Überstrom auch durch eine Treiberschaltung des Gleichrichters 21 erkannt werden. Weiters kann der Gleichrichter 21, bei entsprechender Ausgestaltung mittels PWM auch einen Überstrom begrenzen.

Wie bereits dargelegt ist vorgesehen, dass die Anordnung eine Einheit zur Detektion einer Entsättigung des ersten Halbleiterschalters 5 aufweist, wodurch Überströme, vor allem aber schnell ansteigende Kurzschlussströme, deutlich schneller erkannt und abgeschaltet werden können. Der schnell ansteigende Strom führt zu einer Entsättigung des ersten Halbleiterschalters 5. Dies wird von der entsprechend ausgebildeten Einheit zur Detektion einer Entsättigung erkannt, welcher daraufhin die weiteren Abschaltvorgänge triggert. Entsprechend ausgebildete Treiber sind aus dem technischen Bereich der Invertertechnologie bekannt.

Sobald der Strom auf der DC Seite Null ist, kann das erste Trennrelais 7 ohne Lichtbogen geöffnet werden. Dabei kann entweder der Strom mittels des ersten Stromsensors 6 gemessen werden, oder es wird eine vorgebbare erste Zeitdauer abgewartet, ehe ein Abschaltimpuls an das erste Trennrelais 7 gesendet wird.

Bei einer Anordnung mit nur einer Laststrecke, wie in Fig. 2 dargestellt, werden an die Schaltgeschwindigkeit des ersten Trennrelais 7 keine besonderen Anforderungen gestellt.

Bevorzugt ist die Steuer- und Kontrolleinheit 15 dazu ausgebildet ist, die Komponenten entsprechend anzusteuern dieses Verfahren zum Abschalten wenigstens eines Teiles einer elektrischen AC/DC-Umwandlungs-Anordnung durchzuführen.

Fig. 3 zeigt eine zweite bevorzugte Ausführungsform. Diese weist zwei weitere DC-Zweige, also in Summe drei parallel geschaltete DC-Zweige mit jeweils einem eigenständigen Trennrelais 7, 16, 22 auf. Dabei kann jede Anzahl derartiger paralleler DC-Zweige 7, 16, 22 vorgesehen sein. Die AC-Seite sowie der erste DC-Zweig umfassend das erste Trennrelais 7 sind gegenüber Fig. 1 unverändert.

Das zweite Trennrelais 16 ist mit einem Eingang schaltungstechnisch parallel zum ersten Trennrelais 7 an den ersten Ausgang 10 des Gleichrichters 21 angeschlossen ist. Ein Ausgang des zweiten Trennrelais 16 bildet einen zweiten DC-Ausgang 17 der Anordnung und ist zum Anschluss wenigstens eines zweiten Gleichstromverbrauchers 18 vorgesehen. Ein zweiter Stromsensor 19 ist zwischen dem ersten Ausgang 10 des Gleichrichters 21 und dem zweiten Trennrelais 16 angeordnet. Das zweite Trennrelais 16 und der zweite Stromsensor 19 sind wenigstens mittelbar steuerungstechnisch mit dem AC-Schutzschalter 1 und dem ersten Halbleiterschalter 5 verbunden.

Das dritte Trennrelais 22 ist mit einem Eingang schaltungstechnisch parallel zum ersten Trennrelais 7 an den ersten Ausgang 10 des Gleichrichters 21 angeschlossen ist. Ein Ausgang des dritten Trennrelais 22 bildet einen dritten DC-Ausgang 23 der Anordnung und ist zum Anschluss wenigstens eines dritten Gleichstromverbrauchers 24 vorgesehen. Ein dritter Stromsensor 25 ist zwischen dem ersten Ausgang 10 des Gleichrichters 21 und dem dritten Trennrelais 22 angeordnet. Das dritte Trennrelais 22 und der dritte Stromsensor 25 sind wenigstens mittelbar steuerungstechnisch mit dem AC-Schutzschalter 1 und dem ersten Halbleiterschalter 5 verbunden.

Insbesondere sind das zweite bzw. dritte Trennrelais 16, 22 steuerungstechnisch mit der Steuer- und Kontrolleinheit 15 verbunden.

Diese Anlage bietet weitere Vorteile gegenüber dem Stand der Technik. Sowohl Halbleiterschalter als auch hybride Schaltgeräte sind deutlich schneller als herkömmliche mechanische Schaltgeräte. Die Reaktionszeit des ersten Halbleiterschalters 5 beträgt nur wenige µs. Der gegenständlich verwendete AC-Schutzschalter 1 hat typischerweise eine Ansprechzeit von maximal 500 µs. Dies ermöglich es bei Detektion eines Überstromes bzw. eines Kurzschlussstromes in nur einem der parallel angeordneten DC-Teilnetze die gesamte Anlage kurzzeitig abzuschalten, dabei den Strom auf Null zu bringen, das jeweilige Trennrelais 7, 16, 22 zu öffnen und danach die restliche Anlage wieder einzuschalten. Dieser ganze Vorgang kann in weniger als einer Millisekunde erfolgen. Dies ist kurz genug, damit die angeschlossenen Verbraucher der verbleibenden "gesunden" Teilnetze unbeschadet weiter betrieben werden können. Diese "merken" das kurzzeitige Abschalten gar nicht. Dadurch kann ein Fehler schnell und einfach isoliert werden, während die restliche Anlage sicher weiter betrieben werden kann, wobei keine DC-Schutzschalter erforderlich sind.

Bei Detektion eines vorgebbaren Überstromes, insbesondere eines Kurzschlussstromes, durch den zweiten Stromsensor 19 ist daher vorgesehen, dass in einem ersten Schritt den ersten Halbleiterschalter 5 sowie den AC-Schutzschalter 1 ausgeschaltet werden, nachfolgend, sobald der Strom am zweiten Trennrelais Null ist, in einem zweiten Schritt ein Abschaltimpuls an das zweite Trennrelais 16 gesendet wird, und nach Öffnung des zweiten Trennrelais 16 in einem dritten Schritt der erste Halbleiterschalter 5 und der AC-Schutzschalter 1 wieder eingeschaltet werden, wodurch die restliche Anlage wieder mit Strom versorgt wird.

Fig. 4 zeigt eine dritte bevorzugte Ausführungsform. Diese entspricht weitestgehend der ersten bevorzugten Ausführungsform, wobei jedoch weiters ein zweiter Halbleiterschalter 40 vorgesehen ist, welcher zweite Halbleiterschalter 40 zwischen dem ersten Ausgang 10 des Gleichrichters 21 und dem Glättungskondensator 4 geschaltet ist, und dass der zweite Halbleiterschalter 40 steuerungstechnisch mit der Steuer- und Kontrolleinheit 15 verbunden ist. Die Steuer- und Kontrolleinheit 15 ist dabei weiters dazu ausgebildet, bei Detektion des vorgebbaren Überstromes oder eines Kurzschlussstromes, im ersten Schritt ebenfalls den zweiten Halbleiterschalter 40 auszuschalten.

Die gegenständliche Kombination des ersten Halbleiterschalters 5 und des zweiten Halbleiterschalters 40 ist wesentlich effizienter als die Anordnung eines SSCB auf der DC-Seite. Weiters ermöglicht die gegenständliche Anordnung aus Gleichrichter 21 und zweitem Halbleiterschalter 40 einen bidirektionalen Stromfluss.

Die gegenständliche Anordnung kann vollständig durch Einzelkomponenten ausgebildet bzw. aufgebaut werden. Es kann jedoch weiters vorgesehen sein, dass wenigstens zwei, insbesondere sämtliche, Komponenten als integrierte Einheit in einem gemeinsamen Gehäuse angeordnet sind. Dadurch wird ein kompakter Aufbau erzielt und es können Verdrahtungsfehler vermieden werden.

## Patentansprüche

1. Elektrische AC/DC-Umwandlungs-Anordnung umfassend wenigstens folgende Komponenten:
- einen Gleichrichter (21), welcher zwei Ausgänge (10, 11) unterschiedlicher Polarität aufweist, und
- wenigstens einen Glättungskondensator (4) und einen seriell zu diesem geschalteten ersten Halbleiterschalter (5), wobei der Glättungskondensator (4) und der seriell zu diesem geschaltete erste Halbleiterschalter (5) den ersten Ausgang (10) des Gleichrichters (21) mit dem zweiten Ausgang (11) des Gleichrichters (21) verbinden,
- einen AC-Schutzschalter (1), welcher als Hybrider-Schutzschalter (2) oder als Halbleiter-Schutzschalter ausgebildet ist, wobei ein Eingang des AC-Schutzschalters (1) einen AC-Eingang (8) der Anordnung bildet, und wobei ein Ausgang des AC-Schutzschalters (1) wenigstens mittelbar schaltungstechnisch mit einem Eingang (9) des Gleichrichters (21) verbunden ist,
**dadurch gekennzeichnet, dass** die elektrische AC/DC-Umwandlungs-Anordnung weiters wenigstens folgende Komponenten umfasst:
- wenigstens ein erstes Trennrelais (7) zur galvanischen Trennung, welches zwei Eingänge und zwei Ausgänge aufweist und zwei Schaltstrecken mit jeweils einem Unterbrecherkontakt, wobei beide Ausgänge (10, 11)
des Gleichrichters (21) an das erste Trennrelais (7) angeschlossen sind, dass der erste Ausgang (10) des Gleichrichters (21) weiters wenigstens mittelbar schaltungstechnisch mit einem der zwei Eingänge des ersten Trennrelais (7) verbunden ist, dass ein Ausgang des ersten Trennrelais (7) einen ersten DC-Ausgang (12) der Anordnung bildet und zum Anschluss wenigstens eines ersten Gleichstromverbrauchers (13) vorgesehen ist,
dass die Anordnung als weitere Komponente wenigstens eine Steuer- und Kontrolleinheit (15) umfasst, und dass die Steuer- und Kontrolleinheit (15) wenigstens mittelbar steuerungstechnisch mit dem AC-Schutzschalter (1), dem ersten Halbleiterschalter (5) und dem ersten Trennrelais (7) verbunden ist, dass
die Anordnung zur Kurzschlussdetektion eine Einheit zur Detektion einer Entsättigung des ersten Halbleiterschalters (5) aufweist, welche Einheit insbesondere als Teil der Steuer- und Kontrolleinheit (15) ausgebildet ist,
oder
die Anordnung einen ersten Stromsensor (6) zur Überstromdetektion aufweist, welcher erste Stromsensor (6) zwischen dem ersten Ausgang (10) des Gleichrichters (21) und dem ersten Trennrelais (7) angeordnet und mit der Steuer- und Kontrolleinheit (15) verbunden ist, und dass die Steuer- und Kontrolleinheit (15) dazu ausgebildet ist, bei Detektion eines vorgebbaren Überstromes oder eines Kurzschlussstromes, in einem ersten Schritt den ersten Halbleiterschalter (5) sowie den AC-Schutzschalter (1) auszuschalten, und nachfolgend, sobald der Strom auf der DC Seite Null ist, einen Abschaltimpuls an das erste Trennrelais (7) zu senden.

2. Elektrische AC/DC-Umwandlungs-Anordnung nach Anspruch 1, **dadurch gekennzeichnet, dass** der Gleichrichter (21) und der Glättungskondensator (4) gemeinsam Teil eines aktiven Gleichrichters (3) sind.

3. Elektrische AC/DC-Umwandlungs-Anordnung nach einem der Ansprüche 1 oder 2, **dadurch gekennzeichnet, dass** die Anordnung weiters einen zweiten Halbleiterschalter (40) aufweist, dass der zweite Halbleiterschalter (40) zwischen dem ersten Ausgang (10) des Gleichrichters (21) und dem Glättungskondensator (4) geschaltet ist, und dass der zweite Halbleiterschalter (40) steuerungstechnisch mit der Steuer- und Kontrolleinheit (15) verbunden ist.

4. Elektrische AC/DC-Umwandlungs-Anordnung nach Anspruch 1 und 3, **dadurch gekennzeichnet, dass** die Steuer- und Kontrolleinheit (15) weiters dazu ausgebildet ist, bei Detektion des vorgebbaren Überstromes oder eines Kurzschlussstromes, im ersten Schritt ebenfalls den zweiten Halbleiterschalter (40) auszuschalten.

5. Elektrische AC/DC-Umwandlungs-Anordnung nach einem der Ansprüche 1 bis 4, **dadurch gekennzeichnet, dass** die Anordnung als weitere Komponente wenigstens ein zweites Trennrelais (16) umfasst, dass ein Eingang des zweiten Trennrelais (16) schaltungstechnisch parallel zum ersten Trennrelais (7) an den ersten Ausgang (10) des Gleichrichters (21) angeschlossen ist, dass ein Ausgang des zweiten Trennrelais (16) einen zweiten DC-Ausgang (17) der Anordnung bildet und zum Anschluss wenigstens eines zweiten Gleichstromverbrauchers (18) vorgesehen ist, dass ein zweiter Stromsensor (19) zwischen dem ersten Ausgang (10) des Gleichrichters (21) und dem zweiten Trennrelais (16) angeordnet ist, und dass das zweite Trennrelais (16) und der zweite Stromsensor (19) wenigstens mittelbar steuerungstechnisch mit dem AC-Schutzschalter (1) und dem ersten Halbleiterschalter (5) verbunden sind.

6. Elektrische AC/DC-Umwandlungs-Anordnung nach einem der Ansprüche 1 bis 4 und Anspruch 5, **dadurch gekennzeichnet, dass** die Steuer- und Kontrolleinheit (15) steuerungstechnisch mit dem zweiten Trennrelais (16) verbunden ist, und dass die Steuer- und Kontrolleinheit (15) dazu ausgebildet ist, bei Detektion eines vorgebbaren Überstromes durch den zweiten Stromsensor (19) in einem ersten Schritt den ersten Halbleiterschalter (5) sowie den AC-Schutzschalter (1) auszuschalten, nachfolgend nach Ablauf einer vorgebbaren ersten Zeitdauer in einem zweiten Schritt einen Abschaltimpuls an das zweite Trennrelais (16) zu senden, und nach Öffnung des zweiten Trennrelais (16) in einem dritten Schritt den ersten Halbleiterschalter (5) und den AC-Schutzschalter (1) wieder einzuschalten.

7. Elektrische AC/DC-Umwandlungs-Anordnung nach einem der Ansprüche 1 bis 6, **dadurch gekennzeichnet, dass** wenigstens zwei, insbesondere sämtliche, Komponenten als integrierte Einheit in einem gemeinsamen Gehäuse angeordnet sind.

## Claims

1. An electrical AC/DC converter arrangement comprising at least the following components:
- a rectifier (21) which has two outputs (10, 11) of different polarity, and
- at least one smoothing capacitor (4) and a first semiconductor switch (5) connected in series therewith, the smoothing capacitor (4) and the first semiconductor switch (5) connected in series therewith connecting the first output (10) of the rectifier (21) to the second output (11) of the rectifier (21),
- an AC circuit breaker (1) which is designed as a hybrid circuit breaker (2) or as a semiconductor circuit breaker, an input of the AC circuit breaker (1) forming an AC input (8) of the arrangement, and an output of the AC circuit breaker (1) being connected, at least indirectly in terms of circuitry, to an input (9) of the rectifier (21),
**characterized in that** the electrical AC/DC converter arrangement also comprises at least the following components:
- at least one first isolating relay (7) for galvanic isolation, which relay has two inputs and two outputs and two switching paths each having an interrupter contact, the two outputs (10, 11) of the rectifier (21) being connected to the first isolating relay (7),
**in that** the first output (10) of the rectifier (21) is also connected, at least indirectly in terms of circuitry, to one of the two inputs of the first isolating relay (7), **in that** an output of the first isolating relay (7) forms a first DC output (12) of the arrangement and is provided for connecting at least one first DC load (13),
**in that** the arrangement comprises, as a further component, at least one control and monitoring unit (15), and **in that** the control and monitoring unit (15) is connected, at least indirectly in terms of control technology, to the AC circuit breaker (1), the first semiconductor switch (5) and the first isolating relay (7), **in that**
the arrangement has, for short-circuit detection, a unit for detecting desaturation of the first semiconductor switch (5), which unit is designed in particular as part of the control and monitoring unit (15),
or
the arrangement has a first current sensor (6) for overcurrent detection, which first current sensor (6) is arranged between the first output (10) of the rectifier (21) and the first isolating relay (7) and is connected to the control and monitoring unit (15),
and **in that** the control and monitoring unit (15) is designed to switch off the first semiconductor switch (5) and the AC circuit breaker (1) in a first step when a predefinable overcurrent or a short-circuit current is detected, and subsequently, as soon as the current on the DC side is zero, transmit a switch-off pulse to the first isolating relay (7).

2. The electrical AC/DC converter arrangement according to claim 1, **characterized in that** the rectifier (21) and the smoothing capacitor (4) are together part of an active rectifier (3).

3. The electrical AC/DC converter arrangement according to either of claims 1 or 2, **characterized in that** the arrangement also comprises a second semiconductor switch (40), **in that** the second semiconductor switch (40) is connected between the first output (10) of the rectifier (21) and the smoothing capacitor (4), and **in that** the second semiconductor switch (40) is connected in terms of control technology to the control and monitoring unit (15).

4. The electrical AC/DC converter arrangement according to claims 1 and 3, **characterized in that** the control and monitoring unit (15) is also designed to switch off the second semiconductor switch (40) in the first step when the predefinable overcurrent or a short-circuit current is detected.

5. The electrical AC/DC converter arrangement according to any of claims 1 to 4, **characterized in that** the arrangement, as a further component, comprises at least one second isolating relay (16), **in that** an input of the second isolating relay (16) is connected, in terms of circuitry, in parallel with the first isolating relay (7), to the first output (10) of the rectifier (21), **in that** an output of the second isolating relay (16) forms a second DC output (17) of the arrangement and is provided for connecting at least one second DC load (18), **in that** a second current sensor (19) is arranged between the first output (10) of the rectifier (21) and the second isolating relay (16), and **in that** the second isolating relay (16) and the second current sensor (19) are connected, at least indirectly in terms of control technology, to the AC circuit breaker (1) and the first semiconductor switch (5).

6. The electrical AC/DC converter arrangement according to any of claims 1 to 4 and claim 5, **characterized in that** the control and monitoring unit (15) is connected in terms of control technology to the second isolating relay (16), and **in that** the control and monitoring unit (15) is designed to, when a predefinable overcurrent is detected by the second current sensor (19), switch off the first semiconductor switch (5) and the AC circuit breaker (1) in a first step, and subsequently, after a predefinable first time period has elapsed, transmit a switch-off pulse to the second isolating relay (16) in a second step, and, after the second isolating relay (16) has been opened, switch the first semiconductor switch (5) and the AC circuit breaker (1) on again in a third step.

7. The electrical AC/DC converter arrangement according to any of claims 1 to 6, **characterized in that** at least two components, in particular all of the components, are arranged as an integrated unit in a common housing.

## Revendications

1. Agencement de conversion CA/CC électrique comprenant au moins les composants suivants :
- un redresseur (21) qui présente deux sorties (10, 11) de polarités différentes, et
- au moins un condensateur de filtrage (4) et un premier commutateur à semi-conducteur (5) commuté en série avec celui-ci, le condensateur de filtrage (4) et le premier commutateur à semi-conducteur (5) commuté en série avec celui-ci connectant la première sortie (10) du redresseur (21) à la seconde sortie (11) du redresseur (21),
- un disjoncteur CA (1) qui est conçu en tant que disjoncteur hybride (2) ou en tant que disjoncteur à semi-conducteur, une entrée du disjoncteur CA (1) formant une entrée CA (8) de l'agencement et une sortie du disjoncteur CA (1) étant connectée au moins indirectement, selon la technique des circuits, à une entrée (9) du redresseur (21),
**caractérisé en ce que** l'agencement de conversion CA/CC électrique comprend en outre au moins les composants suivants :
- au moins un premier relais de coupure (7) pour l'isolation galvanique qui présente deux entrées et deux sorties et deux voies de commutation comportant respectivement un interrupteur, les deux sorties (10, 11) du redresseur (21) étant raccordées au premier relais de coupure (7),
**en ce que** la première sortie (10) du redresseur (21) est en outre connectée au moins indirectement, selon la technique des circuits, à l'une des deux entrées du premier relais de coupure (7), **en ce qu'**une sortie du premier relais de coupure (7) forme une première sortie CC (12) de l'agencement et est prévue pour le raccordement à au moins un premier consommateur de courant continu (13),
**en ce que** l'agencement comprend, comme autre composant, au moins une unité de commande et de régulation (15), et **en ce que** l'unité de commande et de régulation (15) est connectée au moins indirectement, selon la technique de la commande, au disjoncteur CA (1), au premier commutateur à semi-conducteur (5) et au premier relais de coupure (7), **en ce que**
l'agencement présente, pour la détection d'un court-circuit, une unité destinée à détecter une désaturation du premier commutateur à semi-conducteur (5), laquelle unité est en particulier conçue comme partie de l'unité de commande et de régulation (15),
ou
l'agencement présente un premier capteur de courant (6) destiné à détecter un courant de surcharge, lequel premier capteur de courant (6) est disposé entre la première sortie (10) du redresseur (21) et le premier relais de coupure (7) et connecté à l'unité de commande et de régulation (15),
et **en ce que** l'unité de commande et de régulation (15) est configurée pour désactiver, lors de la détection d'un courant de surcharge pouvant être prédéfini ou d'un courant de court-circuit, dans une première étape, le premier commutateur à semi-conducteur (5) ainsi que le disjoncteur CA (1) et ensuite, dès que le courant sur le côté CC est nul, pour envoyer une impulsion de désactivation au premier relais de coupure (7).

2. Agencement de conversion CA/CC électrique selon la revendication 1, **caractérisé en ce que** le redresseur (21) et le condensateur de filtrage (4) font conjointement partie d'un redresseur actif (3).

3. Agencement de conversion CA/CC électrique selon l'une des revendications 1 ou 2, **caractérisé en ce que** l'agencement présente en outre un second commutateur à semi-conducteur (40), **en ce que** le second commutateur à semi-conducteur (40) est monté entre la première sortie (10) du redresseur (21) et le condensateur de filtrage (4), et **en ce que** le second commutateur à semi-conducteur (40) est connecté, selon la technique de la commande, à l'unité de commande et de régulation (15).

4. Agencement de conversion CA/CC électrique selon les revendications 1 et 3, **caractérisé en ce que** l'unité de commande et de régulation (15) est en outre configurée pour également désactiver, lors de la détection du courant de surcharge pouvant être prédéfini ou d'un courant de court-circuit, dans la première étape, le second commutateur à semi-conducteur (40).

5. Agencement de conversion CA/CC électrique selon l'une des revendications 1 à 4, **caractérisé en ce que** l'agencement comprend, comme autre composant, au moins un second relais de coupure (16), **en ce qu'**une entrée du second relais de coupure (16) est raccordée, selon la technique des circuits, à la première sortie (10) du redresseur (21) en parallèle par rapport au premier relais de coupure (7), **en ce qu'**une sortie du second relais de coupure (16) forme une seconde sortie CC (17) de l'agencement et est prévue pour le raccordement à au moins un second consommateur de courant continu (18), **en ce qu'**un second capteur de courant (19) est disposé entre la première sortie (10) du redresseur (21) et le second relais de coupure (16), et **en ce que** le second relais de coupure (16) et le second capteur de courant (19) sont connectés au moins indirectement, selon la technique de la commande, au disjoncteur CA (1) et au premier commutateur à semi-conducteur (5).

6. Agencement de conversion CA/CC électrique selon l'une des revendications 1 à 4 et la revendication 5, **caractérisé en ce que** l'unité de commande et de régulation (15) est connectée, selon la technique de la commande, au second relais de coupure (16), et **en ce que** l'unité de commande et de régulation (15) est configurée pour désactiver, lors de la détection d'un courant de surcharge pouvant être prédéfini par le second capteur de courant (19), dans une première étape, le premier commutateur à semi-conducteur (5) ainsi que le disjoncteur CA (1), ensuite, après la fin d'une première durée pouvant être prédéfinie, dans une deuxième étape, pour envoyer une impulsion de désactivation au second relais de coupure (16) et, après l'ouverture du second relais de coupure (16), dans une troisième étape, pour réactiver le premier commutateur à semi-conducteur (5) et le disjoncteur CA (1).

7. Agencement de conversion CA/CC électrique selon l'une des revendications 1 à 6, **caractérisé en ce qu'**au moins deux composants, en particulier tous les composants, sont disposés en tant qu'unité intégrée dans un boîtier commun.
